# EUROPEAN PATENT APPLICATION

(11) **EP 4 775 923 A1**
(43) Date of publication of application: **15.07.2026**
(21) Application number: 26151898.9
(22) Date of filing: 14.01.2026
(51) Int. Cl.: G01B 5/00, G01B 21/04

(54) **FIXTURING SYSTEM FOR SCANNING AN ENGINE COMPONENT**

(30) Priority: 14.01.2025 US 202519020362
(71) Applicant: Pratt & Whitney Canada Corp., (01BE5) Longueuil, QC J4G 1A1 (CA)
(72) Inventor: MORIN, Philippe, (01BE5) Longueuil, J4G 1A1 (CA); DUPRE, Francois, (01BE5) Longueuil, J4G 1A1 (CA); RAHMAN, Mizanur, (01BE5) Longueuil, J4G 1A1 (CA); ZONGO, Teega Wende Floriane Regina, (01BE5) Longueuil, J4G 1A1 (CA); DI FIORE, Christopher, (01BE5) Longueuil, J4G 1A1 (CA)
(74) Representative: Dehns

(57) **Abstract**

A fixturing system (100) for holding an engine component (C), for scanning by a 3D scanner, has: a static base (120) defining a bottom abutment (112) for opposing a gravitational force; fixed arms (122) secured to the base (120) and defining fixed abutments (111) being axially spaced apart from one; and a movable arm (123) defining a movable abutment (113) opposed to the fixed abutments (111) and located axially between the fixed abutments (111) relative to the vertical axis (A1). The fixed abutments (111) and the movable abutment (113) define a component-receiving space for receiving the engine component (C). The movable arm (123) is movable between a release position and an abutting position, the movable abutment (113) being closer to the fixed abutments (111) in the abutting position than in the release position. A biasing member (114) is engaged to the movable arm (123) and exerts a force on the movable arm (123) to bias the movable abutment (113) toward the abutting position.

## Description

### TECHNICAL FIELD

The present invention relates generally to aircraft engines and, more particularly, to systems and methods used for scanning parts of said engines.

### BACKGROUND

In some cases, it is desired to scan a substantial number of engine components, such as vanes. Typically, custom jigs are manufactured and designed to hold a specific engine component. Designing and manufacturing one custom jig, per part number, rapidly becomes costly and inefficient. However, switching engine components into and out of these custom jigs can be time consuming, and multiple different jigs are required when different parts need to be scanned. These jigs may be satisfactory to some extent, but there remains a need for improvements.

### SUMMARY

According to one aspect of the present invention, there is provided a fixturing system for holding an engine component for scanning by a 3D scanner, comprising: a base configured to be static relative to the 3D scanner, the base defining a bottom abutment for opposing a gravitational force exerted on the engine component along a vertical axis; fixed arms secured to the base and defining fixed abutments for abutting the engine component, the fixed abutments being axially spaced apart from one another along the vertical axis; a movable arm defining a movable abutment for abutting the engine component and opposed to the fixed abutments of the fixed arms, the movable abutment located axially between the fixed abutments relative to the vertical axis, the fixed abutments and the movable abutment defining a component-receiving space therebetween for receiving the engine component, the movable arm being movable between a release position and an abutting position, the movable abutment being closer to the fixed abutments in the abutting position than in the release position; and a biasing member engaged to the movable arm, the biasing member exerting a force on the movable arm to bias the movable abutment toward the abutting position.

The fixturing system as defined above and described herein includes, in certain embodiments, one or more of the following features, in whole or in part, and in any combination.

Optionally, and in accordance with the above, one or more of the movable abutment, the bottom abutment, and the fixed abutments define a V-shaped notch for engaging a portion of the engine component.

Optionally, and in accordance with any of the above, the base includes a support protruding upwardly from a base plate, the bottom abutment defined by the support.

Optionally, and in accordance with any of the above, the movable arm is pivotably mounted to the base.

Optionally, and in accordance with any of the above, the movable arm is pivotably mounted to the base via a movable support rail extending along a direction having an axial component relative to the vertical axis, the movable arm extending transversally to the movable support rail.

Optionally, and in accordance with any of the above, the movable arm is movable along the movable support rail.

Optionally, and in accordance with any of the above, the movable arm has a first section extending transversally from the movable support rail, a second section extending transversally to the first section, and a third section extending transversally to the second section and defining the movable abutment.

Optionally, and in accordance with any of the above, the first section, the second section and the third section are parallel to a plain being perpendicular to the movable support rail.

Optionally, and in accordance with any of the above, the fixed arms are connected to the base via a fixed support rail extending along a direction having an axial component relative to the vertical axis, the fixed arms extending transversally to the fixed support rail.

Optionally, and in accordance with any of the above, the fixed arms are each movable along the fixed support rail.

Optionally, and in accordance with any of the above, each of the fixed arms has a first section extending transversally from the fixed support rail, a second section extending transversally to the first section, and a third section extending transversally to the second section and defining a respective one of the fixed abutments.

Optionally, and in accordance with any of the above, the first section, the second section and the third section are parallel to a plain being perpendicular to the fixed support rail.

According to another aspect of the present invention, there is provided an assembly, comprising: an engine component; and a fixturing system for holding the engine component for scanning by a 3D scanner, the fixturing system defining abutments engaged to the engine component at a plurality of distinct locations on the engine component, the abutments collectively blocking movements of the engine component about six degree of freedom, the abutments including: fixed abutments abutting a first side of the engine component; a bottom abutment abutting a bottom of the engine component and opposing a gravitational force exerted on the engine component along a vertical axis; a movable abutment abutting a second side of the engine component opposing the first side, the movable abutment being movable between a release position and an abutting position and being closer to the fixed abutments in the abutting position than in the release position; and a biasing member engaged to the movable abutment for exerting a force on the movable abutment to bias the engine component against the fixed abutments.

The assembly as defined above and described herein includes, in certain embodiments, one or more of the following features, in whole or in part, and in any combination.

Optionally, and in accordance with any of the above, one or more of the abutments define a V-shaped notch for engaging the engine component.

Optionally, and in accordance with any of the above, the fixturing system further includes: a base defining the bottom abutment; fixed arms secured to the base and defining the fixed abutments; and a movable arm defining the movable abutment.

Optionally, and in accordance with any of the above, the base includes a support protruding upwardly from a base plate, the bottom abutment defined by the support.

Optionally, and in accordance with any of the above, the movable arm is pivotably mounted to the base.

Optionally, and in accordance with any of the above, the movable arm is pivotably mounted to the base via a movable support rail extending along a direction having an axial component relative to the vertical axis, the movable arm extending transversally to the movable support rail.

Optionally, and in accordance with any of the above, the fixed arms are connected to the base via a fixed support rail extending along a direction having an axial component relative to the vertical axis, the fixed arms extending transversally to the fixed support rail.

Optionally, and in accordance with any of the above, the fixed arms are each movable along the fixed support rail.

### DESCRIPTION OF THE DRAWINGS

Reference is now made to the accompanying figures in which:
Fig. 1 is a schematic cross sectional view of an aircraft engine depicted as a gas turbine engine;
Fig. 2 is a three dimensional view of a fixturing system for holding a component of the aircraft engine of Fig. 1 during a 3D scanning procedure;
Fig. 3 is an enlarged view of a portion of Fig. 2 illustrating a movable arm of the fixturing system;
Fig. 4 is another three dimensional view of the fixturing system of Fig. 2; and
Figs. 5-7 are three dimensional views of the fixturing system of Fig. 2 illustrating a method of operation thereof.

### DETAILED DESCRIPTION

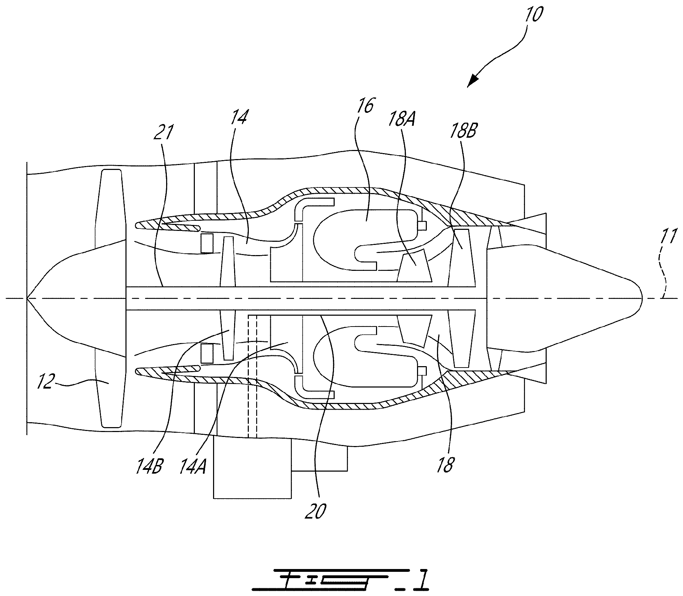

Fig. 1 illustrates an aircraft engine depicted as a gas turbine engine 10 of a type preferably provided for use in subsonic flight, generally comprising in serial flow communication a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. The fan 12, the compressor section 14, and the turbine section 18 are rotatable about a central axis 11 of the gas turbine engine 10. In the embodiment shown, the gas turbine engine 10 comprises a high-pressure spool having a high-pressure shaft 20 drivingly engaging a high-pressure turbine 18A of the turbine section 18 to a high-pressure compressor 14A of the compressor section 14, and a low-pressure spool having a low-pressure shaft 21 drivingly engaging a low-pressure turbine 18B of the turbine section to a low-pressure compressor 14B of the compressor section 14 and drivingly engaged to the fan 12. It will be understood that the contents of the present disclosure may be applicable to any suitable engines, such as turboprops and turboshafts, reciprocating engines, such as piston and rotary engines, hybrid engines, industrial or stationary engines used for power generation, etc., without departing from the scope of the present disclosure.

Although illustrated as a turbofan engine, the gas turbine engine 10 may alternatively be another type of engine, for example a turboshaft engine, also generally comprising in serial flow communication a compressor section, a combustor, and a turbine section, and a fan through which ambient air is propelled. A turboprop engine may also apply. In addition, although the gas turbine engine 10 is described herein for flight applications, it should be understood that other uses, such as industrial or the like, may apply.

The compressor section 14 and the turbine section 18 include each a plurality of airfoils, namely vanes V and blades B. These vanes and blades B, V may be manufactured in various manners, for example using casting and/or machining. As part of the manufacturing and/or assembly process, it may become required to conduct a 3-dimensional (3D) scan of certain engine components, such as airfoils for example, to ensure compliance with manufacturing requirements (e.g., tolerances, dimensions, etc.).

Particularly in cases where a large number of components (e.g., vanes) need to be scanned, the fixturing solution as described herein allows the a secure, accurate and repeatable positioning of the component for 3D scanning. The fixture may provide stability and repeatable positioning on the 3D scanner table since, non-repeatable positioning has been demonstrated to have a negative impact on the gage reproducibility and repeatability (GRR) results. The GRR performance deterioration due to non-repeatable positioning of a part originates from the fact that across its measurement volume, typical 3D scanners have varying degrees of accuracy, and the capture of scanning targets may also vary impacting how accurately scans can be combined together. Additionally, the fixturing solution needs to be usable on multiple types of vanes. It is worthwhile noting that vanes, and airfoils in general, are challenging to support with fixturing as inspection of both of their ends (top and bottom views) and multiple sections along the airfoil may be required. Finally, due to the high volume of parts, setup time may benefit from being very rapid.

As aforementioned, this may be resolved by designing multiple fixtures or jigs, one adapted for each part number. This solution restrains the usability of the fixtures to one part number. The high cost of designing, making, testing and iterating until an acceptable fixture is obtained makes this solution cumbersome. Additionally, the process described is time-consuming, and increases greatly the time frame in which the overall project could be completed.

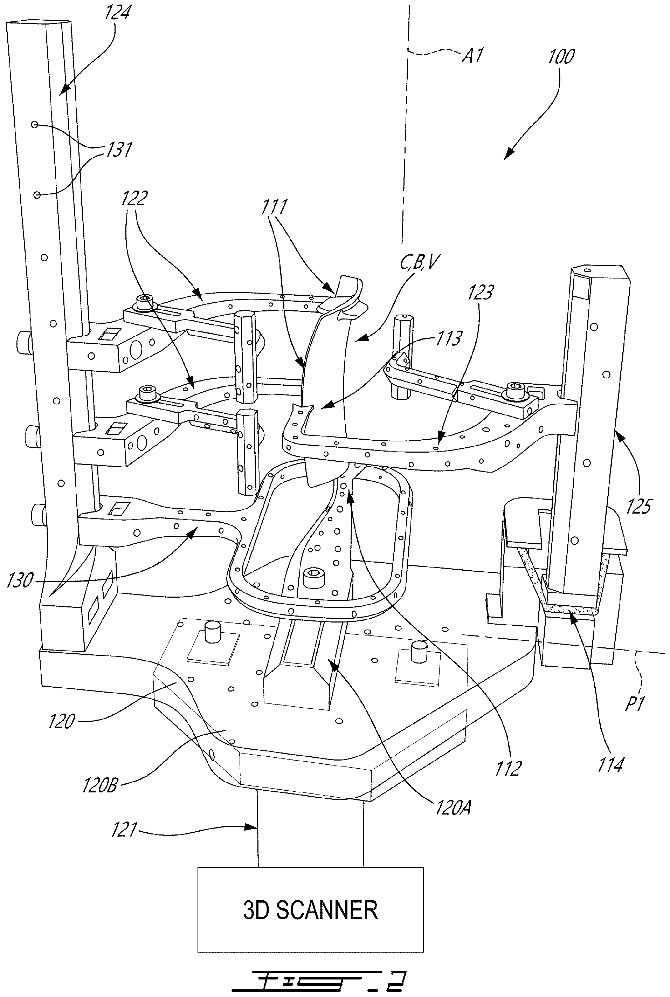

Referring now to Fig. 2, an embodiment of a fixturing system is shown at 100. The fixturing system, or simply "system" below is configured to hold an engine component C, which in this case is a vane V or a blade B. This system may at least partially alleviate the aforementioned drawbacks. It will be appreciated that the system 100 may be configured to hold any engine component in need of 3D scanning such as, for instance, blades, shrouds, seal runners, diffuser pipes, impellers, and so on.

In Fig. 2, the system is shown as part of an assembly including the system 100 and an engine component C, herein a vane V, being held by the system 100 for scanning by a 3D scanner.

The fixturing system 100 is now described in greater detail. The system 100 is configured to hold the engine component C in a fixed position relative to the scanner for scanning. The system 100 includes abutments engaged to the engine component C at a plurality of distinct locations on the engine component C. The abutments collectively block movements of the engine component about six degree of freedom (i.e., translations along the 3 axes and rotations about the 3 axes).

The abutments 110 include fixed abutments 111 abutting a first side of the engine component, a bottom abutment 112 abutting a bottom of the engine component C and opposing a gravitational force exerted on the engine component along a vertical axis A1; and a movable abutment 113 abutting a second side of the engine component C opposing the first side. The movable abutment is movable between a release position and an abutting position and is closer to the fixed abutments in the abutting position than in the release position. A biasing member 114 is engaged to the movable abutment 113 for exerting a force on the movable abutment 113 to bias the engine component C against the fixed abutments 111. The fixed abutments 111, the movable abutment 113, and the bottom abutment 112 conjointly define a component-receiving space therebetween for receiving the engine component C.

The biasing member 114 may include, in certain embodiments, an elastic or other elastomeric element which biases the movable abutment 113 against the engine component C (and thus which also biases the engine component C against the fixed abutments 111). In an alternate embodiment, the biasing member may include an actively controlled actuator, which is, for example, remotely controlled by the scanner's programmable logic controller (PLC). The present fixturing system 100 can also be adapted for a machine tending application, where a robotic arm installed next to the scanning machine loads and unloads vanes onto the fixtures, with the help of an actuatable mobile arm on the fixture.

Still referring to Fig. 2, parts of the fixturing system 100 that define the abutments 110 are described below. In the embodiment shown, the fixturing system 100 includes a base 120 secured to a scanner interface 121 that is itself secured to the 3D scanner. The base 120 defines the bottom abutment 112. The system 100 further includes arms, namely fixed arms 122 and a movable arm 123. Each of the fixed arms 122 defines a respective one of the fixed abutments 111 and the movable arm 123 defines the movable abutment 113. Both of the fixed arms 122 and the movable arm 123 are connected to the base 120. In some embodiments, the base 120 includes a support 120A protruding upwardly from a base plate 120B. The bottom abutment 112 is defined by the support 120A.

The fixturing system 100 includes a fixed support rail 124 protruding upwardly from the base 120 and a movable support rail 125 protruding upwardly from the base 120. These support rails extend along respective directions having a component along the vertical axis A1. These rails are mainly vertical. The expression "mainly" implies that the directions along which the rails extend are majorly axial. That is, a component along the vertical axis A1 is greater than along any other axes being perpendicular to the vertical axis A1. The movable arm 123 extends transversally to the movable support rail 125 and the fixed arms 122 extend transversally to the fixed support rail 124. The fixed arms and the movable arm extend towards one another. The fixed support rail 124 and the movable support rail 125 are spaced apart from one another such that the engine component C is received between these rails. The fixed support rail 124 is fixedly connected to the base 120 and is non-movable relative to the base 120 whereas the movable support rail 125 is pivotably connected to the base 120 for rotation about a pivot axis P1 being transverse to the vertical axis A1. The movable support rail 125 may thus move, herein pivot, relative to the base 120. In an alternate embodiment, the movable support rail 125 may move in translation relative to the base 120 or along any compound movement. In some embodiments, the movable arm 123 is movable along the movable support rail 125 and the fixed arms 122 are each movable along the fixed support rail 124. In other words, the arms may be secured to the rails at a plurality of positions. This may provide an adjustability of the fixturing system such that it may be used with more than one engine component.

The fixed arms 122 are secured to the base 120, herein via the fixed support rail 124 whereas the movable arm 123 is connected to the base 120, wherein via the movable support rail 125. The fixed arms 122 are secured to the fixed support rail 124 at axially spaced apart locations relative to the vertical axis A1 such that the fixed abutments 111 are axially spaced apart from one another about the vertical axis A1. It will be appreciated that other shapes of the fixed arms may be used such that they may be connected at a same location on the fixed support rail and diverge away from one another to provide the axial offset between the fixed abutments 111. The movable arm 123 may be secured to the movable support rail 125 at a location being axially between the fixed arms 122. Put differently, the movable abutment 113 is axially between the fixed abutments 111 relative to the vertical axis A1 to avoid creating a torque on the engine component C.

The fixturing system 100 further includes a target arm 130 protruding transversally from the fixed support rail 124 and defining a loop that surrounds the support 120A of the base 120. Markers 131 are disposed on the base 120, on the target arm 130, on the fixed arms 122, on the movable arm 123, on the fixed support rail 124, and on the movable support rail 125. These markers 131 are detected during the scanning and are used to generate a 3D scan of the engine component C.

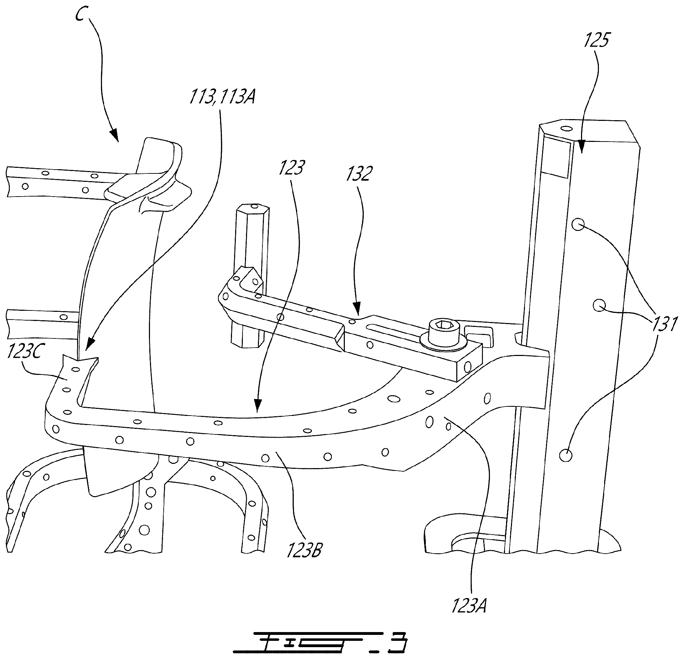

Referring now to Fig. 3, one or more of the movable abutment 113, the fixed abutments 111, and the bottom abutment 112 define a V-shaped notch 113A for engaging a portion of the engine component C. Namely, when the portion of the engine component C to be engaged is one or more of a leading edge or a trailing edge of the vane V, the V-shaped notch 113A may be sized to receive therein the leading or trailing edge such as to prevent a sliding motion between the respective abutment and the leading or trailing edge.

As shown in Fig. 3, secondary target arms 132 are secured to both of the movable arm 123 and the fixed arms 122. These secondary target arms 132 have some of the markers 131 provided thereon and are used to help in the scanning process. They may be omitted in some embodiments.

Each of the fixed arms 122 and the movable arm 123 have three sections extending transversally to one another to define a U-shape. These sections may all be parallel to a plane being transverse to the support rail they are secured to. For instance, with reference to the movable arm 123, it includes a first section 123A extending transversally to the movable support rail 125, a second section 123B extending transversally to the first section 123A, and a third section 123C extending transversally to the second section 123B. The third section 123C defines the movable abutment 113. The sections all lie in a plane being perpendicular to the movable support rail 125. Other configurations are contemplated. The U-shaped provided by the 3 sections may facilitate the engagement of the different abutments to the engine component C and may avoid the arms interfering with the engine component C.

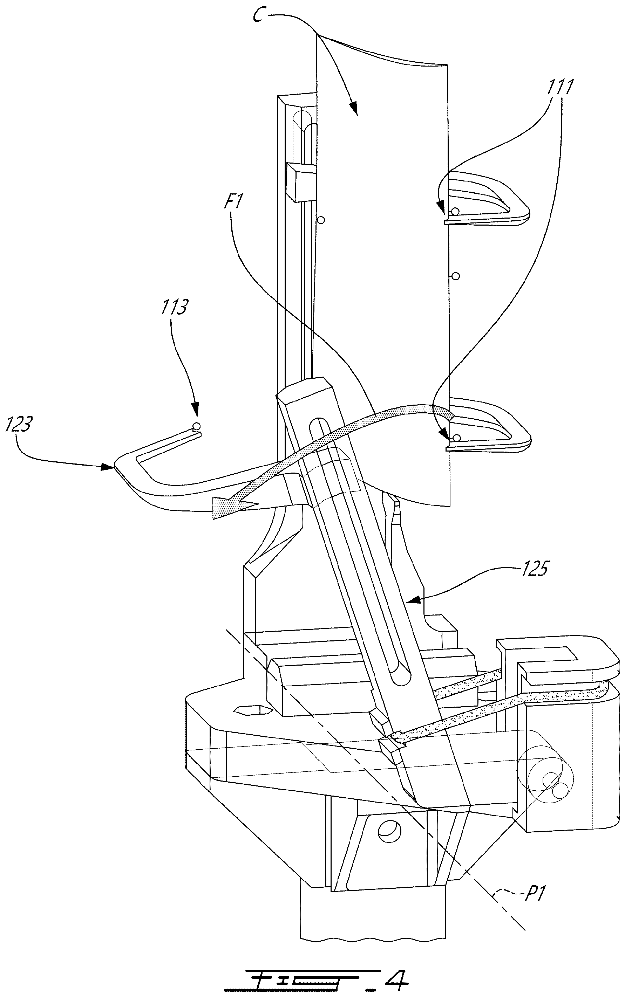

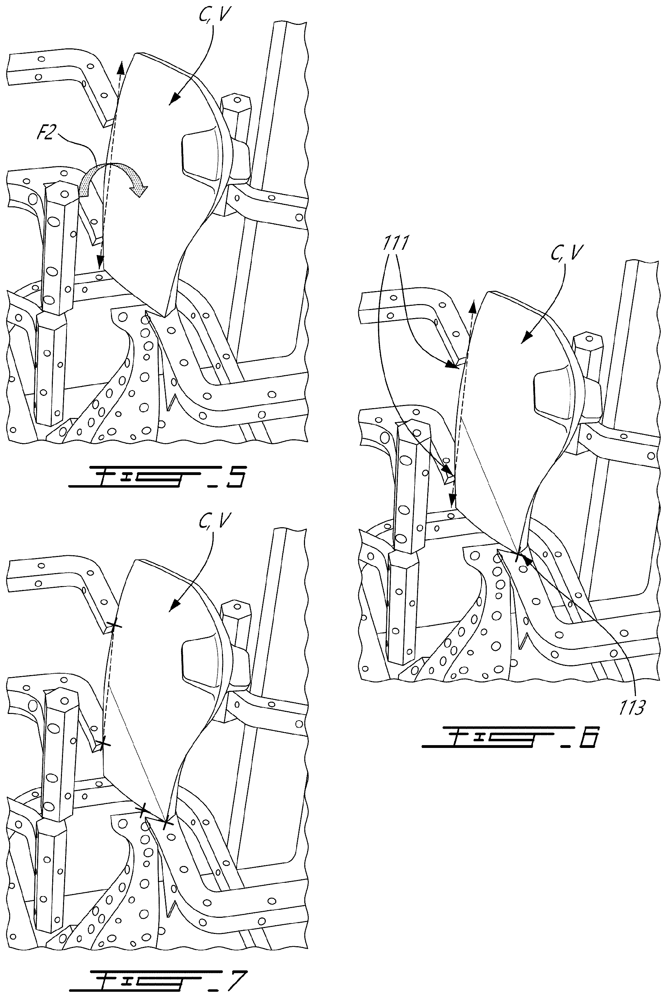

Referring now to Fig. 4, as illustrated, the movable support rail 125 and the movable arm 123 secured thereto are movable between a release position (depicted in Fig. 4) and an abutting position (depicted in Fig. 7). The movable abutment 113 is closer to the fixed abutments 111 in the abutting position than in the release position. As shown, the biasing member 114, which may be an elastic or any other suitable means, is engaged to the movable support rail 125 to exert a force on the movable arm 123 via the movable support rail 125 to bias the movable abutment 113 in the abutting position and against the engine component C such that the engine component C is compressed in sandwich between the movable abutment 113 and the fixed abutments 111. The movable support rail 125 may be moved along direction denoted by arrow F1 to disengage the movable abutment 113 from the engine component C.

Referring now to Figs. 5-7, a sequence of actions for using the fixturing system is shown.

To scan an engine component, herein a vane V, a user pulls on the movable support rail 125 to increase a space between the fixed abutments 111 and the movable abutment 113 and insert the vane therebetween until an edge of the vane is received within the V-notches defined by the fixed abutments 111. In so doing, the vane is somewhat limited in translation, but may pivot along a direction denoted by arrow F2.

As shown in Fig. 6, to block the rotation of the vane about the vertical axis A1, the movable abutment 113 is moved towards the engine component C until the V-notch engages another edge of the vane V. This limits rotation of the vane V along the vertical axis A1 and limits rotation of the vane along two other axes being perpendicular to the vertical axis A1 and perpendicular to one another.

As shown in Fig. 7, to limit translation of the vane V about the vertical axis A1, the vane V may be moved downwardly until the bottom abutment 112 engages a bottom portion of the vane V. At which point, these four abutments conjointly block movement of the vane V about the six degrees of freedom and a scanning of the engine component C may be performed. Also, the biasing member 114 exerts a clamping force such that the engine component C is held between the movable abutment 113 and the fixed abutments 111. It will be appreciated that any number of abutments may be used in other configurations depending of the engine component to be scanned.

The fixturing system 100 may allow satisfactory scanning performance for any part number of vane, with a single fixture. It may also enable rapid part setup and repeatable positioning as stated by the GRR. Finally, it may support in a fully constrained state the vane (or other component) without obstructing the ends of the vane nor the sections.

It is noted that various connections are set forth between elements in the preceding description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities. The term "connected" or "coupled to" may therefore include both direct coupling (in which two elements that are coupled to each other contact each other) and indirect coupling (in which at least one additional element is located between the two elements).

It is further noted that various method or process steps for embodiments of the present disclosure are described in the preceding description and drawings. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. The use of the indefinite article "a" as used herein with reference to a particular element is intended to encompass "one or more" such elements, and similarly the use of the definite article "the" in reference to a particular element is not intended to exclude the possibility that multiple of such elements may be present.

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. A fixturing system (100) for holding an engine component (C) for scanning by a 3D scanner, comprising:
a base (120) configured to be static relative to the 3D scanner, the base (120) defining a bottom abutment (112) for opposing a gravitational force exerted on the engine component (C) along a vertical axis (A1);
fixed arms (122) secured to the base (120) and defining fixed abutments (111) for abutting the engine component (C), the fixed abutments (111) being axially spaced apart from one another along the vertical axis (A1);
a movable arm (123) defining a movable abutment (113) for abutting the engine component (C) and opposed to the fixed abutments (111) of the fixed arms (122), the movable abutment (113) located axially between the fixed abutments (111) relative to the vertical axis (A1), the fixed abutments (111) and the movable abutment (113) defining a component-receiving space therebetween for receiving the engine component (C), the movable arm (123) being movable between a release position and an abutting position, the movable abutment (113) being closer to the fixed abutments (111) in the abutting position than in the release position; and
a biasing member (114) engaged to the movable arm (123), the biasing member (114) exerting a force on the movable arm (123) to bias the movable abutment (113) toward the abutting position.

2. The fixturing system (100) of claim 1, wherein one or more of the movable abutment (113), the bottom abutment (112), and the fixed abutments (111) define a V-shaped notch (113A) for engaging a portion of the engine component (C).

3. The fixturing system (100) of claim 1 or 2, wherein the base (120) includes a support (120A) protruding upwardly from a base plate (120B), the bottom abutment (112) defined by the support (120A).

4. The fixturing system (100) of any preceding claim, wherein the movable arm (123) is pivotably mounted to the base (120).

5. The fixturing system (100) of any preceding claim, wherein the movable arm (123) is pivotably mounted to the base (120) via a movable support rail (125) extending along a direction having an axial component relative to the vertical axis (A1), the movable arm (123) extending transversally to the movable support rail (125).

6. The fixturing system (100) of claim 5, wherein the movable arm (123) is movable along the movable support rail (125).

7. The fixturing system (100) of claim 5 or 6, wherein the movable arm (123) has a first section (123A) extending transversally from the movable support rail (125), a second section (123B) extending transversally to the first section (123A), and a third section (123C) extending transversally to the second section (123B) and defining the movable abutment (113).

8. The fixturing system (100) of claim 7, wherein the first section (123A), the second section (123B) and the third section (123C) are parallel to a plain being perpendicular to the movable support rail (125).

9. The fixturing system (100) of any preceding claim, wherein the fixed arms (122) are connected to the base (120) via a fixed support rail (124) extending along a direction having an axial component relative to the vertical axis (A1), the fixed arms (122) extending transversally to the fixed support rail (124).

10. The fixturing system (100) of claim 9, wherein the fixed arms (122) are each movable along the fixed support rail (124).

11. The fixturing system (100) of claim 9 or 10, wherein each of the fixed arms (122) has a first section extending transversally from the fixed support rail (124), a second section extending transversally to the first section, and a third section extending transversally to the second section and defining a respective one of the fixed abutments (111).

12. The fixturing system (100) of claim 11, wherein the first section, the second section and the third section are parallel to a plain being perpendicular to the fixed support rail (124).

13. An assembly, comprising:
an engine component (C); and
the fixturing system (100) of any preceding claim, wherein:
the fixed abutments (111) abut a first side of the engine component (C);
the bottom abutment (112) abuts a bottom of the engine component (C);
the movable abutment (113) abuts a second side of the engine component (C) opposing the first side; and
the biasing member (114) exerts the force on the movable abutment (113), biasing the engine component (C) against the fixed abutments (111).
